# EUROPEAN PATENT SPECIFICATION

(11) **EP 2 299 512 B1**
(45) Date of publication and mention of the grant of the patent: **24.04.2013**
(21) Application number: 10164550.5
(22) Date of filing: 01.06.2010
(51) Int. Cl.: H01M 2/04, H01M 2/34

(54) **Cap assembly for a rechargeable battery**
Zellendeckelanordnung für eine wiederaufladbare Batterie
Ensemble couvercle pour une batterie rechargeable

(30) Priority: 01.09.2009 US 238965 P; 17.05.2010 US 781656
(43) Date of publication of application: 23.03.2011
(73) Proprietor: Samsung SDI Co., Ltd., Gyeonggi-do (KR); Robert Bosch GmbH, 70442 Stuttgart (DE)
(72) Inventor: Byun, Sang-Won, Gyeonggi-do (KR); Kim, Yong-Sam, Gyeonggi-do (KR); Kim, Hyo-Seob, Gyeonggi-do (KR); Kim, Sung-Bae, Gyeonggi-do (KR); Ahn, Byung-Kyu, Gyeonggi-do (KR)
(74) Representative: Gulde, Klaus W.

(56) References cited:
- JP-A- 10 326 610
- JP-A- 11 007 931
- JP-A- 2004 319 463

## Description

### Field of the Invention

This disclosure relates to a rechargeable battery. More particularly, the present invention relates to a rechargeable battery including a safety apparatus that the overcharge state is solved to prevent the explosion.

### Description of the Related Art

A rechargeable battery can be recharged and discharged, unlike a primary battery that cannot be recharged. A low capacity rechargeable battery is used for a small portable electronic device such as a mobile phone, a laptop computer, and a camcorder, and a large capacity rechargeable battery is used as a power source for driving a motor such as for a hybrid vehicle.

A large capacity high power rechargeable battery with high energy density using a non-aqueous electrolyte has been developed, and the rechargeable battery is formed with a large capacity high power rechargeable battery module by coupling a plurality of rechargeable batteries in series or in parallel in order to use it to drive a device, for example, a motor such as an electric vehicle requiring a large amount of electric power.

Further, a high power rechargeable battery is generally formed with a plurality of rechargeable batteries that are coupled in series or in parallel, and the rechargeable battery may be formed in a cylindrical shape or a prismatic shape.

The prismatic rechargeable battery includes an electrode assembly that a separator is interposed between a positive electrode and a negative electrode, a case accommodating the electrode assembly, a cap plate sealing the case and having a terminal hole in which a terminal is inserted, and a terminal electrically connected with the electrode assembly and inserted in the terminal hole to protrude toward the outside of case.

When heat is excessively generated inside a rechargeable battery, or electrolyte solution is decomposed to increase the internal pressure, the battery may bring danger of exploding or firing. Particularly, the prismatic battery is difficult to have a structure that current is blocked and discharged since it has a unique terminal structure compared to a cylindrical battery.

Examples of secondary batteries of the prior art are disclosed in JP 10 326610 A, JP 11 007931 A and JP 2004 319463 A.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a rechargeable battery having improved safety.

The present invention provides a rechargeable battery as defined in claims 1 and 10.

The rechargeable battery includes an electrode assembly having a first electrode, a second electrode, and a separator interposed between the first and the second electrodes, as well as a case for mounting the electrode assembly therein and a cap assembly. The cap assembly comprises a cap plate for closing an opening of the case, a deformable plate attached to the cap plate, the deformable plate being in communication with the inside of the battery and adapted to be deformed, and a conductive connection member coupled to the deformable plate and adapted to connect the first electrode with the second electrode upon deformation of the deformable plate.

Advantageously, a separate connection member establishes a short-circuit state upon deformation of a deformable plate.

The deformable plate is adapted to be deformed upon an increase of an internal pressure inside the battery. Thus, the short-circuit state is established after an increase of an internal pressure inside the battery.

The deformable plate comprises an arc shaped deformable part, under normal operation conditions curved toward and protruding into the interior of the battery. It includes an edge part and a deformable part formed on the inner side of the edge part and protruding in an arch curve toward the interior of the battery.

The connection member preferably has a larger thickness than the deformable plate.

Thereby, it is possible to maintain a short-circuit state even when a large current flows and the deformable plate alone would melt.

In case of the battery according to claim 1, the connection member may comprise a material having a higher melting point than a material of the deformable plate.

Advantageously, such connection member endures higher temperatures than the deformable plate would do allowing the short-circuit state to persist at higher temperatures.

In case of the battery according to claim 1, the connection member is preferably directly affixed to the separate deformable plate. It may be affixed to the deformable plate via a connecting bar.

The connection member preferably comprises at least one of the group consisting of aluminum, copper, and stainless-steel, and the deformable plate preferably comprises at least one of the group consisting of aluminum and stainless-steel.

The cap assembly further comprises a first tab electrically connected to the first electrode. In case of the battery of claim 1, the first tab may have a planar shape. It may be disposed below the cap plate and may be on one side end connected to the first electrode and on the other side end continues until below the deformable plate. In another embodiment, the first tab may be disposed above the cap plate and may be on one side end connected to the first electrode via a first terminal and on the other side end continues until above the deformable plate.

In case of the battery of claim 1, the cap assembly further comprises a second tab electrically connected to the second electrode, the first tab and the second tab being disposed spaced apart from each other, wherein the connection member is adapted to electrically connect the first tab with the second tab upon deformation of the deformable plate to short-circuit the first electrode and the second electrode.

The first and second tabs are used to connect the first electrode to the second electrode in order to help establishing a short.

The connection member electrically connects the first tab to the second tab to induce the short-circuit.

Thereby, according to the present exemplary embodiment, a battery explosion may be prevented when the internal pressure of a rechargeable battery is excessively increased. Overheat of the cap plate may be prevented since a current is not passed through the cap plate. By forming the first and second tabs spaced apart, it is ensured that they are not electrically connected.

In case of the battery of claim 1, the deformable plate is preferably formed below a short-circuit hole provided in the cap plate. Thus, the deformable plate communicates with the tabs through the short-circuit hole. The short-circuit hole is closed by the deformable plate to seal the battery.

The first tab and the second tap are preferably disposed below the cap plate and the connection member is disposed below the first and second tab and attached to the deformable plate via a connecting bar.

A first lead tab is preferably provided to electrically connect the first tab to the first electrode and a second lead tab is provided to electrically connect the second tab with the second electrode.

The first tab and the second tap are preferably disposed above the cap plate and the connection member is disposed below the first and second tab but above the deformable plate.

Advantageously, it may also be prevented that heat is excessively generated inside the rechargeable battery due to the short-circuit current, by disposing all the taps outside the case.

In case of the battery of claim 10, the connection member and the deformable plate are made out of conductive material, the deformable plate being electrically connected to the second electrode via the cap plate, and the cap assembly preferably further comprises a first tab electrically connected to the first electrode, wherein the connection member is adapted to electrically contact the first tab upon deformation of the deformable plate.

The cap assembly may further comprise an upper insulating member such that the first tab is coupled to the cap plate with the upper insulating member interposed therebetween to electrically isolate the first tab from the cap plate.

In the battery of claim 10 a circular vent is formed in the first tab above and corresponding to the location of a short-circuit hole formed in the cap plate.

According to the present invention, a short-circuit is generated when the internal pressure of rechargeable battery is increased to prevent the chargeable battery from exploding or firing. The connection or intermediate member is contacted with the short-circuit tab and fused to prevent the stop of short-circuit state. Thereby, the safety of rechargeable battery is improved.

### BRIEF DESCRIPTION OF THE DRAWINGS

FIG. 1 is a perspective view of a rechargeable battery according to a first embodiment of the present invention.
FIG. 2 is a cross-sectional view of the rechargeable battery taken along the line II-II of FIG. 1.
FIG. 3 is a cross-sectional view of a rechargeable battery according to a second embodiment of the present invention.
FIG. 4 is a cross-sectional view of a rechargeable battery according to a third embodiment of the present invention.

### DETAILED DESCRIPTION OF THE EMBODIMENTS

As used herein, in this disclosure, the term 'deformable plate' refers to all kinds of plates to be capable of being modified according to pressure increase, but is not particularly limited.

The present invention will be described more fully hereinafter with reference to the accompanying drawings, in which exemplary embodiments of the invention are shown. As those skilled in the art would realize, the described embodiments may be modified in various different ways, all without departing from the present invention. In the specification and drawings, like reference numerals designate like elements.

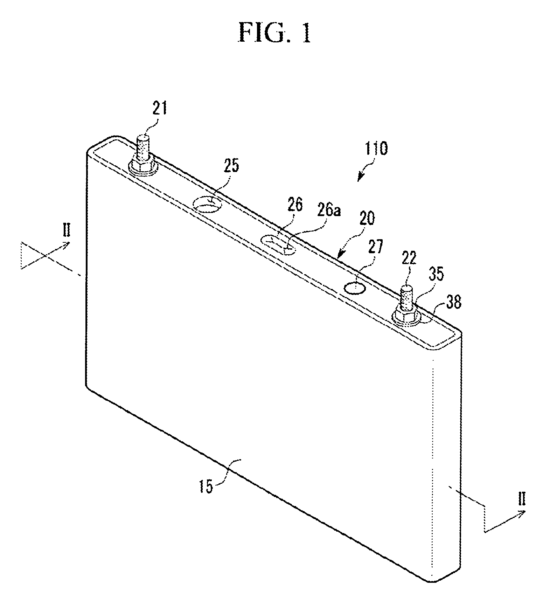

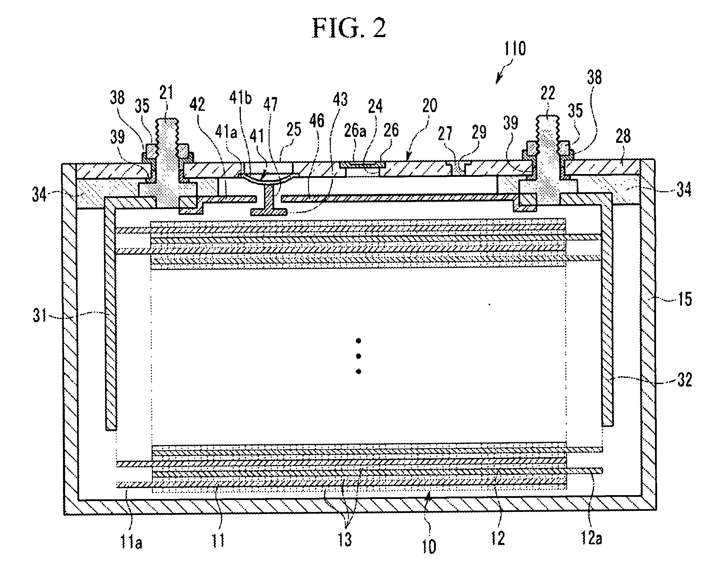

FIG. 1 is a perspective view of a rechargeable battery according to a first embodiment of the present invention, and FIG. 2 is a cross-sectional view of the rechargeable battery taken along the line II-II of FIG. 1.

Referring to FIGS. 1 and 2, the rechargeable battery 110 according to the embodiment of the present invention includes an electrode assembly 10 in which an insulator separator 13 interposed between a first electrode 11 and a second electrode 12 is wound; a case 15 housing the electrode assembly 10; and a cap assembly 20 assembled with a opening of the case 15.

The rechargeable battery 110 according to the first embodiment is described with reference to a prismatic lithium ion rechargeable battery as an example. However, the present invention is not limited thereto, but it is applicable to the various types such as a lithium polymer battery, a cylindrical battery and so on.

The first electrode 11 and the second electrode 12 include a coating region where active material is coated on a current collector formed of a thin plate of a metal foil and an uncoated region 11a and 12a where the active material is not coated. According to the present exemplary embodiment, the first electrode 11 is designated to a positive electrode, and the second electrode 12 is a negative electrode. However, it is only exemplary, and the first electrode 11 may be a negative electrode, and the second electrode 12 may be a positive electrode.

The uncoated region 11 a of first electrode is formed on the one side end of the first electrode 11 along with the length direction of the first electrode 11; the uncoated region 12a of second electrode is formed on the other side end of the second electrode 12 along with the length direction of the second electrode 12. The first electrode 11 and the second electrode 12 interpose an insulator separator 13 therebetween and are spirally wound.

However, the electrode assembly 10 may be provided by alternatively laminating the first electrode 11 and the second electrode 12 including a plurality of sheets with an interposed separator 13 therebetween.

A case 15 is preferably approximately cuboid and has an opening such that one surface of the case is opened. The cap assembly 20 includes a cap plate 28 covering the opening of case 15, a first terminal 21 electrically connected to the first electrode 11, a second terminal 22 electrically connected to the second electrode 12, a first tab or first short-circuit tab 42 electrically connected with the first terminal 21, a second tab or second short-circuit tab 46 electrically connected with the second terminal 22, and a deformable plate 41 fixed on the cap plate 28.

The cap plate 28 preferably has a thin plate and is assembled to close the opening of case 15. A sealing plug 27 is provided in an electrolyte injection opening 29 of the cap plate 28. The cap plate includes a vent plate 26 provided in the vent hole 24 and having a notch 26a to be opened under the predetermined pressure.

The first terminal 21 and the second terminal 22 are formed to penetrate through the cap plate 28, and a supported flange is formed under the cap plate 28. The circumference of the protruded upper column of cap plate 28 is processed to a screw. In addition, nuts 35 supported above are jointed with terminals 21 and 22.

An upper gasket 38 and a lower gasket 39 are provided between the cap plate 28 and the first terminal 21 and the second terminal 22 to seal and insulate between terminals 21 and 22 and the cap plate 28.

The first terminal 21 electrically connects with the first electrode 11 by means of the first lead tab 31, and the second terminal 22 electrically connects with the second electrode 12 by means of the second lead tab 32.

However, a lower insulating member 34 is disposed beneath the cap plate 28, and the lower end of terminals 21 and 22 and the upper end of lead tabs 31 and 32 are inserted in the lower insulating member 34.

The first lead tab 31 electrically connects the first terminal 21 to the first electrode 11, and the second lead tab 32 electrically connects the second terminal 22 to the second electrode 12 as in the structure.

The first short-circuit tab 42 preferably has a substantially plate shape and is disposed in this embodiment under the cap plate 28. In the first short-circuit tab 42, one side terminal end is welded and fixed on the first lead tap 31, and the other side terminal end continues until the below the deformable plate 41.

According to the present exemplary embodiment, it exemplifies that the first short-circuit tab 42 is welded and fixed on the first lead tab 31, but it is not limited thereto. The first short-circuit tab 42 may be welded and fixed on the first terminal 21, or welded and fixed on both the first lead tab 31 and the first terminal 21.

The second short-circuit tab 46 preferably also has a substantial plate shape and is in this embodiment disposed under the cap plate 28. One side terminal end of the second short-circuit tab 46 is welded and fixed on the second lead tap 32, and the other side terminal end continues until the below the deformable plate 41.

The first short-circuit tab 42 and the second short-circuit tab 46 are disposed with leaving space or spaced-apart, so they are not electrically connected.

A short-circuit hole 25 is formed in a cap plate 28, and the deformable plate 41 is formed under the short-circuit hole 25.

The deformable plate 41 is welded and joined to the cap plate 28 and includes a edge part 41 a having a flat ring shape and a transforming part 41 b that is formed inside the edge part 41 a and protrudes in arch curve toward the electrode assembly 10.

A connection member 43 is mounted under the deformable plate 41, and the connection member 43 is connected to the deformable plate 41 through a connecting bar 47.

The connection member 43 is formed to have a larger thickness than that of the deformable plate 41 and preferably has an approximate disc shape.

The size of the thickness of the deformable plate 41 may depend on the thickness of the case. For example, the thickness of the deformable plate 41 may be in the range of 0.3-0.5mm, while the thickness of connection member 43 may be in the range of 1mm to 2mm. In general, also holding for the other embodiments described herein, the thickness of the connection member may be preferably at least twice as large than the thickness of the deformable plate, more preferably at least four times as large, even more preferably at least six times as large in order to maintain a short-circuit state.

The connecting bar 47 is passed between the short-circuit tabs 42 and 46 and continues until there below. The connection member 43 is fixed on the lower end of the connecting bar 47. Thereby, the connection member 43 is disposed lower than the short-circuit tabs 42 and 46, and the terminal end of the first short-circuit tab 42 and the terminal end of the second short-circuit tab 46 are disposed between the connection member 43 and the deformable plate 41.

When the internal pressure of rechargeable battery 110 is excessively increased, the transformation part 41 b protruded toward downside is inverted to upside. Thereby, the connection member 43 is lifted, so as to electrically connect the first short-circuit tab 42 to the second short-circuit tab 46.

The deformable plate 41 is designated to inversely transform its shape under the predetermined pressure, such that a limit to an increase of its thickness exists. Accordingly, when the deformable plate 41 directly contacts the short-circuit tabs 42 and 46, the deformable plate 41 may be fused due to an excessive current passing as a result of the short circuit. Thereby, problems of an interruption of the short-circuit state may occur.

However, according to the present exemplary embodiment, since the connection member 43 contacts the short-circuit tabs 42 and 46, and the connection member is formed to have a larger thickness than the deformable plate, it is possible to prevent the interruption of the short-circuit state even if an excessive current passes as a result of the short-circuit.

In addition, in view of the state of the art, if a member such as a spring and so on is continuously pressed during normal operation time, its elasticity is decreased or it disappears after the pressing force has been applied for long time. In order to ensure safety of the rechargeable battery with respect to its life-cycle, it is very important for the elements of a rechargeable battery not to decrease its elasticity and to operate under the predetermined pressure during the whole life-cycle. However, the elasticity of a member such as a spring and so on decreases during the life-cycle and stops to work under the predetermined pressure, causing a problem of a deterioration of the safety. According to the present exemplary embodiment, due to the use of a deformable plate 41, no element is pressured during normal operation time. Therefore, the battery may work under the predetermined pressure even after a long time has elapsed.

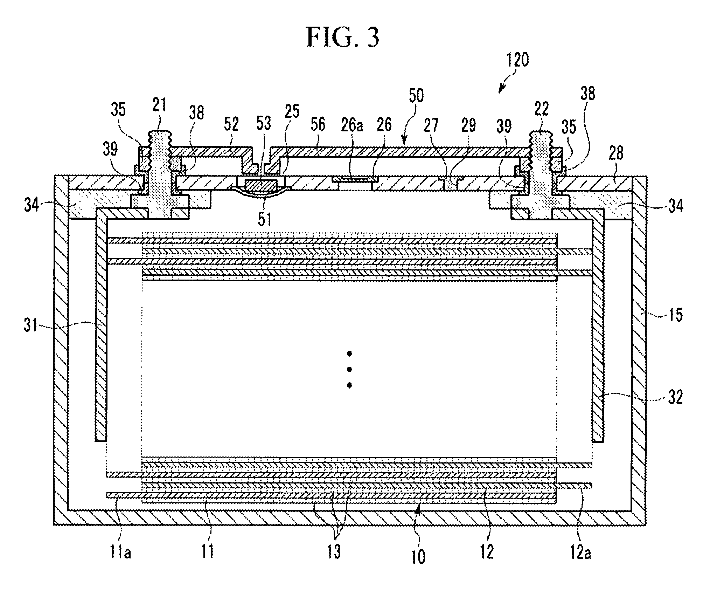

FIG. 3 is a cross-sectional view of a rechargeable battery according to a second embodiment of the present invention.

Referring to FIG. 3, the rechargeable battery 120 according to another embodiment has the same structure as in the rechargeable battery cell according to the above first embodiment, except for the structure of short-circuit taps and connection members, so the same description is not repeated and incorporated herein.

As shown in FIG. 3, the rechargeable battery cell 120 according to the present exemplary embodiment includes an electrode assembly 10, a case 15 inserting the electrode assembly 10, and a cap assembly 50 sealing the case 15. The cap assembly 50 includes a cap plate 28 assembled with the opening of the case 15, a first terminal 21 electrically connecting to the first electrode 11 and a second terminal 22 electrically connecting to the second electrode 12.

The cap plate 28 is a thin plate and has a hollow short-circuit hole 25.

A first terminal tap 52 is formed to be electrically connected to the first terminal 21 and disposed above the short-circuit hole 25. A second short-circuit tab 56 is formed to be electrically connected to the second terminal 22 and disposed on the short-circuit hole 25.

The first short-circuit tab 52 and the second short-circuit tab 56 are disposed with leaving space or spaced apart above the cap plate 28, and they do not directly contact the cap plate 28.

An deformable plate 51 is provided under the short-circuit hole 25, and a connection member 53 is welded and fixed with the deformable plate 51.

The connection member 53 is welded and fixed to the deformable plate 51 along its lower end circumference and has a larger thickness than the deformable plate 51.

When the internal pressure of rechargeable battery 120 is increased, the deformable plate 51 is converted to curve toward the upper side to lift the connection member 53 to the upper side.

The lifted connection member 53 electrically connects the first short-circuit tab 52 to the second short-circuit tab 56 to induce the short-circuit.

Thereby, according to the present exemplary embodiment, by electrically connecting the terminal taps 52 and 56 an explosion of the battery upon an excessive increase of an internal pressure inside the rechargeable battery 120 may be prevented. It may also be prevented that heat is excessively generated inside the rechargeable battery 120 as a result of the short-circuit current, by disposing all the terminal taps 52 and 56 outside the case 15. An overheat of the cap plate 28 may be prevented since current is not passed through the cap plate 28.

In addition, since the first short-circuit tab 52 and the second short-circuit tab 56 are all disposed outside, heat may be easily released toward outside through the first short-circuit tab 52 and the second short-circuit tab 56. It may prevent the electrolyte solution from firing since the short-circuit part leaves space from the electrolyte solution.

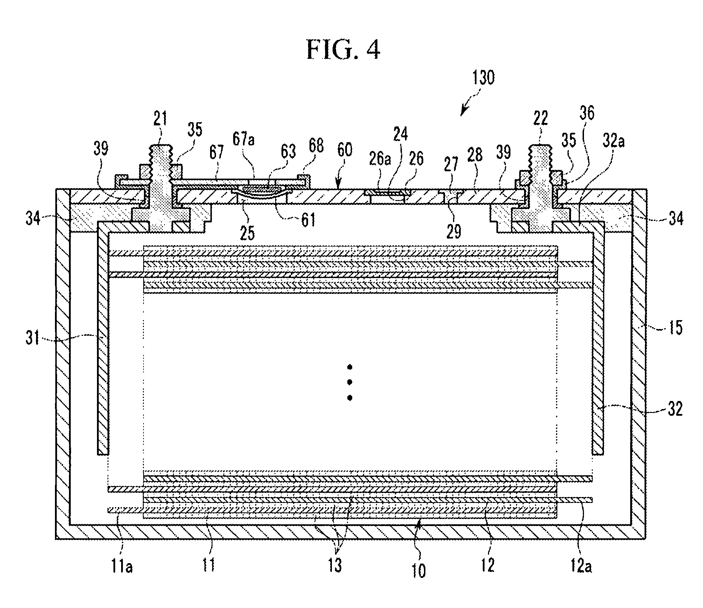

FIG. 4 is a cross-sectional view of a rechargeable battery according to a third embodiment of the present invention.

The rechargeable battery 130 according to the present exemplary embodiment includes an electrode assembly 10, a case hosing the electrode assembly 10, and a cap assembly 60 sealing the case 15. The cap assembly 60 includes a cap plate 28 assembled with the opening of case 15, a first terminal 21 electrically connected to the first electrode 11, and a second terminal 22 electrically connected to the second electrode 12.

The cap plate 28 is preferably a thin plate and preferably has a hollow short-circuit hole 25.

A first short-circuit tab 67 disposed on the short-circuit hole 25 is formed to be electrically connected with the first terminal 21.

The first short-circuit tab 67 has an approximate plate shape and disposed above the cap plate 28. The first terminal 21 is inserted in the hole of first terminal tap 67 and fixed by a nut 35 formed above the first terminal tap and jointed with the first terminal 21. Thereby, the first short-circuit tab 67 is electrically connected to the first terminal 21 through a nut 35.

A connecting tap 36 is formed between the second terminal 22 and the nut 35. The connecting tap 36 plays a role of electrically connecting between the second terminal 22 and the cap plate 28. A second terminal 22 is inserted in a hole of connecting tap 36. The connecting tap 36 is fastened to the cap plate 28 through a nut 35 formed there above. According to the present exemplary embodiment, the cap plate 28 becomes a second short-circuit tab.

An upper insulation member 68 is formed between the first short-circuit tap 67 and the cap plate 28 for the insulation. A part of upper insulation member 68 surrounds the first terminal 21, and the edge surrounds the side end of the first short-circuit tab 67. The first short-circuit tab 67 is stably supported through the upper insulation member 67, so it may minimize the deformation even when it is pressed by the transformation of deformable plate 61.

In addition, a circular vent 67a is formed in the part corresponding to the upper area of terminal hole 25 in the first short-circuit tap 67. A hole is formed on the area corresponding to the upper area of terminal hole 25 in the upper insulation member 68.

A deformable plate 61 is provided above the short-circuit hole 25. A connection member 63 is welded and fixed on the deformable plate 61. Thereby, the deformable plate 61 is electrically connected to the second electrode 12 by means of the cap plate 28.

The deformable plate 61 has the same structure as in the first embodiment. The connection member 63 includes a material having a higher melting point than that of the deformable plate 61 and has an approximate disc shape. In addition, the connection member 63 is welded and fixed to the deformable plate 61 along the circumference of its lower end thereof.

When the internal pressure of rechargeable battery 130 is increased, the deformable plate 61 is transformed into convex toward upper side to lift the connection member 63 toward the upper side. The lifted intermediated member 63 induces the short-circuit by electrically connecting the first short-circuit tab 67 to the cap plate 28, so as to prevent the rechargeable battery from the explosion.

While this invention has been described in connection with what is presently considered to be practical exemplary embodiments, it is to be understood that the invention is not limited to the disclosed embodiments, but, on the contrary, is intended to cover various modifications and equivalent arrangements included within the appended claims.

## Claims

1. A rechargeable battery comprising:
an electrode assembly (10) having a first electrode (11), a second electrode (12), and a separator (13) interposed between the first and the second electrodes (11, 12);
a case (15) for mounting the electrode assembly (10) therein; and
a cap assembly (20, 50) comprising:
a cap plate (28) for closing an opening of the case (15);
a deformable plate (41, 51) attached to the cap plate (28), the deformable plate (41, 51) being in communication with the inside of the battery (110, 120) and adapted to be deformed;
a conductive connection member (43, 53) coupled to the deformable plate (41, 51) and adapted to connect the first electrode (11) with the second electrode (12) upon deformation of the deformable plate (41, 51); and
a first tab (42, 52) electrically connected to the first electrode (11) and a second tab (46, 56) electrically connected to the second electrode (12), the first tab (42, 52) and the second tab (46, 56) being disposed spaced apart from each other, wherein the connection member (43, 53) is adapted to electrically connect the first tab (42, 52) with the second tab (46, 56) upon deformation of the deformable plate (41, 51) to short-circuit the first electrode (11) and the second electrode (12);
**characterized in that**
the deformable plate (41, 51) is adapted to be deformed upon an increase of an internal pressure inside the battery and includes an edge part (41 a) and a deformable part (41 b) formed on the inner side of the edge part (41 a) and protruding in an arch curve toward the interior of the battery.

2. Rechargeable battery according to claim 1, wherein the connection member (43, 53): has a larger thickness than the deformable plate (41, 51); and/or comprises a material having a higher melting point than a material of the deformable plate (41, 51).

3. Rechargeable battery according to any of the previous claims, wherein the connection member (43, 53) is directly affixed to the deformable plate (51), and/or is affixed to the deformable plate (41) via a connecting bar (47).

4. Rechargeable battery according to any of the previous claims, wherein the connection member (43, 53) comprises at least one of the group consisting of aluminum, copper, and stainless-steel, and the deformable plate (41, 51) comprises at least one of the group consisting of aluminum and stainless-steel.

5. Rechargeable battery according to any of the previous claims, wherein the first tab (42, 52):
has a planar shape; and/or
is disposed below the cap plate (28) and is one side end connected to the first electrode (11) and on the other side end continues until below the deformable plate (41, 51); or
is disposed above the cap plate (28) and is one side end connected to the first electrode (11) via a first terminal (21) and on the other side end continues until above the deformable plate (41, 51).

6. Rechargeable battery according to any of the previous claims, wherein the deformable plate (41, 51) is formed below a short-circuit hole (25) provided in the cap plate (28) and/or wherein a short-circuit hole (25) is closed by the deformable plate (41, 51).

7. Rechargeable battery according to any of the previous claims, wherein the first tab (42) and the second tap (46) are disposed below the cap plate (28) and the connection member (43) is disposed below the first and second tab (42, 46) and attached to the deformable plate (41) via a connecting bar (47).

8. Rechargeable battery according to at least one of claims any of the previous claims, wherein a first lead tab (31) is provided to electrically connect the first tab (42) to the first electrode (11) and a second lead tab (32) is provided to electrically connect the second tab (46) with the second electrode (11).

9. Rechargeable battery according to one of claims 1 to 5, wherein the first tab (42) and the second tap (46) are disposed above the cap plate (28) and the connection member (43) is disposed below the first and second tab (42, 46) but above the deformable plate (41, 51).

10. A rechargeable battery comprising:
an electrode assembly (10) having a first electrode (11), a second electrode (12), and a separator (13) interposed between the first and the second electrodes (11, 12);
a case (15) for mounting the electrode assembly (10) therein; and
a cap assembly (60) comprising:
a cap plate (28) for closing an opening of the case (15), the cap plate (28) having a hollow short-circuit hole (25);
a deformable plate (61) attached to the cap plate (28), the deformable plate (61) being provided above the short-circuit hole (25), in communication with the inside of the battery (130) and adapted to be deformed, and
a conductive connection member (63) welded and fixed on deformable plate (61) and adapted to connect the first electrode (11) with the second electrode (12) upon deformation of the deformable plate (61), wherein the connection member (63) includes a material having a higher melting point than that of the deformable plate (61) and has a disc shape;
a first tab (67) disposed above the cap plate (28) and on the short-circuit hole (25), having an approximate plate shape and being electrically connected to the first electrode (11), wherein the connection member (63) is adapted to electrically contact the first tab (67) upon deformation of the deformable plate (61);
a circular vent (67a) is formed in the first tab (67) above and corresponding to the location of the short-circuit hole (25) formed in the cap plate (28);
an upper insulation member (68) formed between the first tab (67) and the cap plate (28) to isolate the first tab (67) from the cap plate (28), an edge of the insulation member (68) surrounding a side end of the first tab (67), wherein the upper insulation member (68) comprises a hole formed in an area of the upper insulation member (68) corresponding to the upper area of the short-circuit hole (25);
wherein the connection member (63) and the deformable plate (61) are made out of conductive material, the deformable plate (61) being electrically connected to the second electrode (12) via the cap plate (28);
**characterized in that**
the deformable plate (61) is adapted to be deformed upon an increase of an internal pressure inside the battery and includes an edge part (41 a) and a deformable part (41 b) formed on the inner side of the edge part (41 a) and protruding in an arch curve toward the interior of the battery.

## Patentansprüche

1. Wiederaufladbare Batterie, aufweisend:
eine Elektrodenanordnung (10), die eine erste Elektrode (11), eine zweite Elektrode (12) und einen Separator (13) aufweist, der zwischen der ersten und zweiten Elektrode (11, 12) angeordnet ist;
ein Gehäuse (15), in dem die Elektrodenanordnung (10) angebracht ist; und
eine Deckelanordnung (20, 50), die Folgendes aufweist:
eine Deckelplatte (28) zum Schließen einer Öffnung des Gehäuses (15);
eine verformbare Platte (41, 51), die an der Deckelplatte (28) befestigt ist, wobei die verformbare Platte (41, 51) mit dem Inneren der Batterie (110, 120) in Verbindung steht und ausgebildet ist, verformt zu werden;
ein leitendes Verbindungselement (43, 53), das mit der verformbaren Platte (41, 51) gekoppelt ist und ausgebildet ist, nach einer Verformung der verformbaren Platte (41, 51) die erste Elektrode (11) mit der zweiten Elektrode (12) zu verbinden; und
eine erste Anschlussfahne (42, 52), die mit der ersten Elektrode (11) elektrisch verbunden ist, und eine zweite Anschlussfahne (46, 56), die mit der zweiten Elektrode (12) elektrisch verbunden ist, wobei die erste Anschlussfahne (42, 52) und die zweite Anschlussfahne (46, 56) voneinander beabstandet angeordnet sind, wobei das Verbindungselement (43, 53) ausgebildet ist, nach einer Verformung der verformbaren Platte (41, 51) die erste Anschlussfahne (42, 52) mit der zweiten Anschlussfahne (46, 56) elektrisch zu verbinden, so dass die erste Elektrode (11) und die zweite Elektrode (12) kurzgeschlossen werden;
**dadurch gekennzeichnet, dass**
die verformbare Platte (41, 51) ausgebildet ist, nach einem Anstieg eines Innendrucks in der Batterie verformt zu werden, und einen Randteil (41 a) und einen verformbaren Teil (41 b) aufweist, der auf der Innenseite des Randteils (41a) ausgebildet ist und in einem Bogen zum Inneren der Batterie hin vorragt.

2. Wiederaufladbare Batterie nach Anspruch 1, wobei das Verbindungselement (43, 53) eine größere Dicke als die verformbare Platte (41, 51) aufweist; und/oder ein Material aufweist, das einen höheren Schmelzpunkt aufweist als ein Material der verformbaren Platte (41, 51).

3. Wiederaufladbare Batterie nach einem der vorhergehenden Ansprüche, wobei das Verbindungselement (43, 53) direkt an der verformbaren Platte (51) befestigt ist, und/oder über eine Verbindungsstange (47) an der verformbaren Platte (41) befestigt ist.

4. Wiederaufladbare Batterie nach einem der vorhergehenden Ansprüche, wobei das Verbindungselement (43, 53) zumindest eines aus der Gruppe bestehend aus Aluminium, Kupfer und rostfreiem Stahl aufweist, und wobei die verformbare Platte (41, 51) zumindest eines aus der Gruppe bestehend aus Aluminium und rostfreiem Stahl aufweist.

5. Wiederaufladbare Batterie nach einem der vorhergehenden Ansprüche, wobei die erste Anschlussfahne (42, 52):
eine ebene Form aufweist; und/oder
unter der Deckelplatte (28) angeordnet ist und an einem Seitenende mit der ersten Elektrode (11) verbunden ist und am anderen Seitenende bis unter die verformbare Platte (41, 51) weiter verläuft; oder
über der Deckelplatte (28) angeordnet ist und an einem Seitenende über einen ersten Anschluss (21) mit der ersten Elektrode (11) verbunden ist und am anderen Seitenende bis unter die verformbare Platte (41, 51) weiter verläuft.

6. Wiederaufladbare Batterie nach einem der vorhergehenden Ansprüche, wobei die verformbare Platte (41, 51) unter einem Kurzschluss-Loch (25) ausgebildet ist, das in der Deckelplatte (28) bereitgestellt wird, und/oder wobei ein Kurzschluss-Loch (25) von der verformbaren Platte (41, 51) geschlossen wird.

7. Wiederaufladbare Batterie nach einem der vorhergehenden Ansprüche, wobei die erste Anschlussfahne (42) und die zweite Anschlussfahne (46) unter der Deckelplatte (28) angeordnet sind und das Verbindungselement (43) unter der ersten und zweiten Anschlussfahne (42, 46) angeordnet ist und über eine Verbindungsstange (47) an der verformbaren Platte (41) befestigt ist.

8. Wiederaufladbare Batterie nach zumindest einem der Ansprüche einem der vorhergehenden Ansprüche, wobei ein erster Leitungsstreifen (31) bereitgestellt wird, um die erste Anschlussfahne (42) mit der ersten Elektrode (11) elektrisch zu verbinden, und ein zweiter Leitungsstreifen (32) bereitgestellt wird, um die zweite Anschlussfahne (46) mit der zweiten Elektrode (11) elektrisch zu verbinden.

9. Wiederaufladbare Batterie nach einem der Ansprüche 1 bis 5, wobei die erste Anschlussfahne (42) und die zweite Anschlussfahne (46) über der Deckelplatte (28) angeordnet sind und das Verbindungselement (43) unter der ersten und zweiten Anschlussfahne (42, 46), jedoch über der verformbaren Platte (41, 51), angeordnet ist.

10. Wiederaufladbare Batterie, aufweisend:
eine Elektrodenanordnung (10), die eine erste Elektrode (11), eine zweite Elektrode (12) und einen Separator (13) aufweist, der zwischen der ersten und zweiten Elektrode (11, 12) angeordnet ist;
ein Gehäuse (15), in dem die Elektrodenanordnung (10) angebracht ist; und
eine Deckelanordnung (60), die Folgendes aufweist:
eine Deckelplatte (28) zum Schließen einer Öffnung des Gehäuses (15), wobei die Deckelplatte (28) ein hohles Kurzschluss-Loch (25) aufweist;
eine verformbare Platte (61), die an der Deckelplatte (28) befestigt ist, wobei die verformbare Platte (61) über dem Kurzschluss-Loch (25) in Verbindung mit dem Inneren der Batterie (130) stehend bereitgestellt wird und ausgebildet ist, verformt zu werden, und
ein leitendes Verbindungselement (63), das auf der verformbaren Platte (61) angeschweißt und befestigt ist und ausgebildet ist, nach einer Verformung der verformbaren Platte (61) die erste Elektrode (11) mit der zweiten Elektrode (12) zu verbinden, wobei das Verbindungselement (63) ein Material aufweist, das einen Schmelzpunkt aufweist, der höher als der Schmelzpunkt der verformbaren Platte (61) ist, und eine Scheibenform aufweist;
eine erste Anschlussfahne (67), die über der Deckelplatte (28) und auf dem Kurschluss-Loch (25) angeordnet ist, und eine ungefähre Plattenform aufweist und mit der ersten Elektrode (11) elektrisch verbunden ist, wobei das Verbindungselement (63) ausgebildet ist, nach einer Verformung der verformbaren Platte (61) mit der ersten Anschlussfahne (67) elektrisch in Kontakt zu stehen;
eine kreisförmige Öffnung (67a), die in der ersten Anschlussfahne (67) über dem und korrespondierend mit dem Ort des Kurzschluss-Lochs (25) ausgebildet ist, das in der Deckelplatte (28) ausgebildet ist;
ein oberes Isolationselement (68), das zwischen der ersten Anschlussfahne (67) und der Deckelplatte (28) zur Isolierung der ersten Anschlussfahne (67) von der Deckelplatte (28) ausgebildet ist, wobei ein Rand des Isolationselements (68) ein Seitenende der ersten Anschlussfahne (67) umgibt, wobei das obere Isolationselement (68) ein Loch aufweist, das in einem Bereich des oberen Isolationselements (68) korrespondierend mit dem oberen Bereich des Kurzschluss-Lochs (25) ausgebildet ist;
wobei das Verbindungselement (63) und die verformbare Platte (61) aus leitendem Material hergestellt sind, wobei die verformbare Platte (61) über die Deckelplatte (28) mit der zweiten Elektrode (12) elektrisch verbunden ist;
**dadurch gekennzeichnet, dass**
die verformbare Platte (61) ausgebildet ist, nach einem Anstieg eines Innendrucks in der Batterie verformt zu werden, und einen Randteil (41 a) und einen verformbaren Teil (41 b) aufweist, der auf der Innenseite des Randteils (41a) ausgebildet ist und in einem Bogen zum Inneren der Batterie hin vorragt.

## Revendications

1. Batterie rechargeable, comprenant :
un ensemble d'électrodes (10) comportant une première électrode (11), une deuxième électrode (12) et un séparateur (13) interposé entre la première et la deuxième électrodes (11, 12) ;
un boîtier (15) pour monter l'ensemble d'électrodes (10) à l'intérieur de celui-ci ; et
un ensemble de capuchon (20, 50), comprenant :
une plaque de capuchon (28) pour fermer une ouverture du boîtier (15) ;
une plaque déformable (41, 51) fixée à la plaque de capuchon (28), la plaque déformable (41, 51) étant en communication avec l'intérieur de la batterie (110, 120) et étant conçue de façon à être déformée ;
un élément de connexion conducteur (43, 53) couplé à la plaque déformable (41, 51) et conçu de façon à connecter la première électrode (11) à la deuxième électrode (12) lors de la déformation de la plaque déformable (41, 51) ; et
une première patte (42, 52) électriquement connectée à la première électrode (11) et une deuxième patte (46, 56) électriquement connectée à la deuxième électrode (12), la première patte (42, 52) et la deuxième patte (46, 56) étant disposées de façon mutuellement espacée l'une de l'autre, l'élément de connexion (43, 53) étant conçu de façon à connecter électriquement la première patte (42, 52) à la deuxième patte (46, 56) lors de la déformation de la plaque déformable (41, 51) de façon à court-circuiter la première électrode (11) et la deuxième électrode (12) ;
**caractérisée en ce que** :
la plaque déformable (41, 51) est conçue de façon à être déformée lors d'une augmentation d'une pression interne à l'intérieur de la batterie, et comprend une partie de bord (41a) et une partie déformable (41b) formée sur le côté intérieur de la partie de bord (41a) et faisant saillie sous la forme d'une courbe en arche vers l'intérieur de la batterie.

2. Batterie rechargeable selon la revendication 1, dans laquelle l'élément de connexion (43, 53) a une épaisseur supérieure à celle de la plaque déformable (41, 51) ; et/ou comprend un matériau ayant un point de fusion supérieur à celui d'un matériau de la plaque déformable (41, 51).

3. Batterie rechargeable selon l'une quelconque des revendications précédentes, dans laquelle l'élément de connexion (43, 53) est directement fixé à la plaque déformable (51), et/ou est fixé à la plaque déformable (41) par l'intermédiaire d'une barre de connexion (47).

4. Batterie rechargeable selon l'une quelconque des revendications précédentes, dans laquelle l'élément de connexion (43, 53) comprend au moins l'un parmi le groupe comprenant l'aluminium, le cuivre et l'acier inoxydable, et la plaque déformable (41, 51) comprend au moins l'un parmi le groupe comprenant l'aluminium et l'acier inoxydable.

5. Batterie rechargeable selon l'une quelconque des revendications précédentes, dans laquelle la première patte (42, 52) :
a une forme plane ; et/ou
est disposée en dessous de la plaque de capuchon (28) et est, à une première extrémité latérale, connectée à la première électrode (11), et, à l'autre extrémité latérale, se poursuit jusqu'en dessous de la plaque déformable (41, 51) ; ou
est disposée au-dessus de la plaque de capuchon (28) et est, à une première extrémité latérale, connectée à la première électrode (11) par l'intermédiaire d'une première borne (21), et, à l'autre extrémité latérale, se poursuit jusqu'au-dessus de la plaque déformable (41, 51).

6. Batterie rechargeable selon l'une quelconque des revendications précédentes, dans laquelle la plaque déformable (41, 51) est formée en dessous d'un trou de court-circuit (25) réalisé dans la plaque de capuchon (28) et/ou dans laquelle un trou de court-circuit (25) est fermé par la plaque déformable (41, 51).

7. Batterie rechargeable selon l'une quelconque des revendications précédentes, dans laquelle la première patte (42) et la deuxième patte (46) sont disposées en dessous de la plaque de capuchon (28) et l'élément de connexion (43) est disposé en dessous des première et deuxième pattes (42, 46) et est fixé à la plaque déformable (41) par l'intermédiaire d'une barre de connexion (47).

8. Batterie rechargeable selon au moins l'une quelconque des revendications précédentes, dans laquelle une première patte conductrice (31) est est prévue de façon à connecter électriquement la première patte (42) à la première électrode (11) et une deuxième patte conductrice (32) est prévue de façon à connecter électriquement la deuxième patte (46) à la deuxième électrode (11).

9. Batterie rechargeable selon l'une des revendications 1 à 5, dans laquelle la première patte (42) et la deuxième patte (46) sont disposées au-dessus de la plaque de capuchon (28) et l'élément de connexion (43) est disposé en dessous des première et deuxième pattes (42, 46) mais au-dessus de la plaque déformable (41, 51).

10. Batterie rechargeable, comprenant :
un ensemble d'électrodes (10) comportant une première électrode (11), une deuxième électrode (12) et un séparateur (13) interposé entre la première et la deuxième électrodes (11, 12) ;
un boîtier (15) pour monter l'ensemble d'électrodes (10) à l'intérieur de celui-ci ; et
un ensemble de capuchon (60), comprenant :
une plaque de capuchon (28) pour fermer une ouverture du boîtier (15), la plaque de capuchon (28) comportant un trou de court-circuit creux (25) ;
une plaque déformable (61) fixée à la plaque de capuchon (28), la plaque déformable (61) étant disposée au-dessus du trou de court-circuit (25), en communication avec l'intérieur de la batterie (140) et conçue de façon à être déformée, et
un élément de connexion conducteur (63) soudé et fixé sur la plaque déformable (61), et conçu de façon à connecter la première électrode (11) à la deuxième électrode (12) lors de la déformation de la plaque déformable (61), l'élément de connexion (63) comprenant un matériau ayant un point de fusion supérieur à celui de la plaque déformable (61) et ayant une forme de disque ;
une première patte (67) disposée au-dessus de la plaque de capuchon (28) et sur le trou de court-circuit (25), ayant une forme approximative de plaque et électriquement connectée à la première électrode (11), l'élément de connexion (63) étant conçu de façon à venir électriquement en contact avec la première patte (67) lors de la déformation de la plaque déformable (61) ;
un évent circulaire (67a) formé dans la première patte (67) au-dessus de l'emplacement du trou de court-circuit (25) formé dans la plaque de capuchon (28) et correspondant à celui-ci ;
un élément d'isolement supérieur (68) formé entre la première patte (67) et la plaque de capuchon (28) de façon à isoler la première patte (67) de la plaque de capuchon (28), un bord de l'élément d'isolement (68) entourant une extrémité latérale de la première patte (67), l'élément d'isolement supérieur (68) comprenant un trou formé dans une zone de l'élément d'isolement supérieur (68) correspondant à la zone supérieure du trou de court-circuit (25) ;
l'élément de connexion (63) et la plaque déformable (61) étant réalisés en un matériau conducteur, la plaque déformable (61) étant électriquement connectée à la deuxième électrode (12) par l'intermédiaire de la plaque de capuchon (28) ;
**caractérisée en ce que** :
la plaque déformable (61) est conçue de façon à être déformée lors d'une augmentation de la pression interne à l'intérieur de la batterie, et comprend une partie de bord (41a) et une partie déformable (41b) formée sur le côté intérieur de la partie de bord (41a) et faisant saillie sous la forme d'une courbe en arche vers l'intérieur de la batterie.
